# EUROPEAN PATENT APPLICATION

(11) **EP 2 998 214 A1**
(43) Date of publication of application: **23.03.2016**
(21) Application number: 15184451.1
(22) Date of filing: 09.09.2015
(51) Int. Cl.: B62M 9/16

(54) **CHAIN TENSIONER**

(30) Priority: 18.09.2014 IT TV20140137
(71) Applicant: Lightech Srl, 31015 Conegliano (TV) (IT)
(72) Inventor: Furlan, FABRIZIO, 31015 CONEGLIANO (TV) (IT)
(74) Representative: Citron, Massimiliano

(57) **Abstract**

To improve the performance and adjustment precision thereof, a chain tensioner (MC; MC2) for tensioning a driving chain of a motorcycle is provided, comprising
a first piece (20, 120) which can be fixed to a fork of the motorcycle;
a second piece (50, 150) which comprises a fitting (18, 158) for a wheel of the motorcycle and which is guided by the first piece;
a threaded element (70, 170) cooperating with a corresponding female-thread so that a relative rotation of these last two entails the displacement of the second piece relative to the first piece;
characterized by comprising
an element (90, 190), separated from the threaded element and the female-thread, adapted to transmit motion to at least one of the threaded element and the female-thread so as to cause said rotation.

## Description

The invention relates to a chain tensioner for the driving chain of a motorcycle, namely the chain destined to transfer power from the engine to a wheel, usually the rear one mounted on a rear fork,.

In motorcycles, above all on sport or racing types, the tension of the driving chain is essential, e.g. to increase the durability of the chain or decrease the noise level thereof.

There are various models of chain tensioners, e.g. swinging-armed as in US3834246 or rocking-armed as in US4299582.

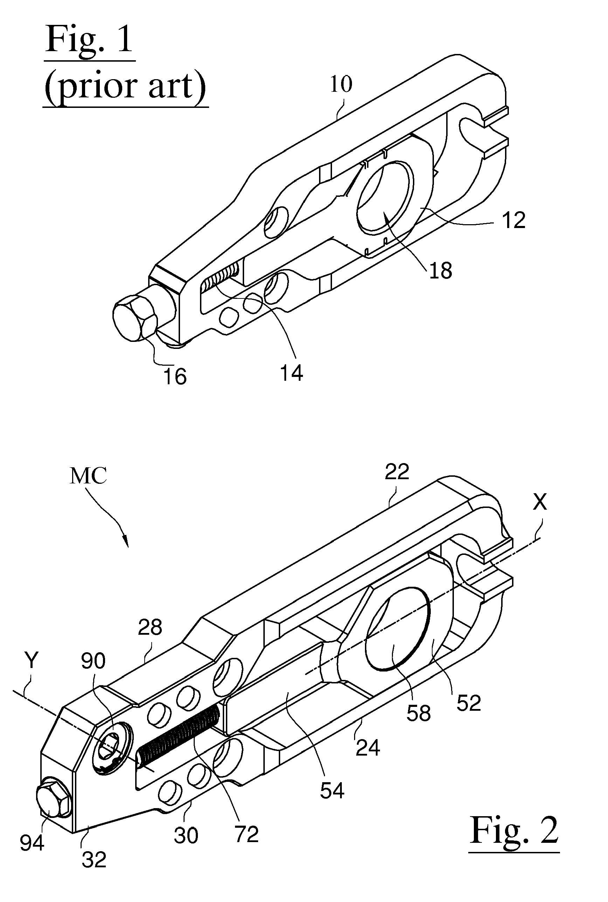

A particular construction of the chain tensioner, more robust, provides (see Figure 1) for a piece 10 that can be fixed to a rear fork of the motorcycle and a second piece 12 which comprises a hole 18 for a pin of a wheel. The second piece 12 is guided linearly by the first. To adjust the tension of the chain the two pieces 10, 12 are moved relatively, the former being fixed to the frame and the second movable. Through the relative rotation between a threaded portion of a pin 14, rotatable but stationary on the first piece 10, and a female-thread formed in the second piece 12, one gets the desired chain tension.

Currently the pin 14 is turned by rotating the head 16 thereof protruding from the second piece 12 with a key or a gripper, which is facilitated because the head 16 faces the rear of the motorcycle.

This system:
- requires some effort to turn the pin 14, especially when the chain is already tensioned;
- has not very high precision in the positioning of the second piece 12;
- requires that the head of pin 14 has shoulders very resistant to traction and has overall massive structure, to withstand the stress.

Improving the chain tensioner with respect to one or more of these drawbacks is the object of the invention, and this is the advantageous effect of what herein annexed in the claims, in which the dependent ones define advantageous variants.

It is therefore proposed a chain tensioner for tensioning a driving chain of a motorcycle, comprising
a first piece which can be fixed to a fork of the motorcycle;
a second piece which comprises a fitting, e.g. a bore or a cavity, for a wheel of the motorcycle and which is guided, e.g. linearly, by the first piece;
a threaded element cooperating with a corresponding female-thread so that a relative rotation of these last two entails the displacement of the second piece relative to the first piece;
an element, separated from the threaded element and the female-thread, adapted to transmit motion to at least one of the threaded element and the female-thread so as to cause said rotation.

By using such separate element there is the advantage to adjust the tension independently of the characteristics or mutual constraints of the threaded element and the female-thread. The result is greater safety and adjustment precision.

The separate element may cause the rotation of the threaded element with respect to the female-thread, or vice versa. In particular, to reduce the complexity, the separate element can be in direct contact with the at least one, in order to operate it directly, or to act without contact by means of e.g. an electric or magnetic field or intermediate means such as chains, belts or gears.

The ways and means for inducing said rotation are manifold: e.g. the separated element can be mounted meshing with the at least one (this provides a resistant connection), or by interlocking or mechanical interference. In particular, the separate element may comprise a threaded portion engaged on a threaded or knurled portion of the at least one (not necessarily the same portion engaged in the female-thread). This guarantees an excellent coupling and a mechanism that prevents slacks.

For compactness and resistance to the efforts, the separate member may be housed in a seat obtained in the first or second piece. In particular the seat may comprise a wall with an opening from which the at least one is accessible, in order to simplify the connection and the transmission of the motion.

Preferably, the separate element is rotatably mounted, e.g. in said seat. Even if the separate element can be mounted guided, e.g. linearly, on the first or second piece, the possibility of being able to operate it by turning it facilitates the operations of assembly and adjustment, e.g. by screwdrivers, wrenches and drills. In particular, by appropriately selecting the rotation axis of the separate element one can make a compact and/or convenient chain tensioner. Therefore it is preferred that the separate element has a rotation axis different from a rotation axis of the at least one, preferably orthogonal to a rotation axis of the at least one. Not only this facilitates the coupling through meshing or direct engagement, but it better distributes the stresses on the separate element coming from the threaded element or the female-thread.

The threaded element may be screwed or is screwable into a corresponding female-thread formed in the first or second piece. In the first case it is possible to slim the structure of the second piece because the female-thread is shorter. If the threaded element comprises a projection mounted in abutment on the outer surface of the second piece, the projection counteracts the force exerted by the chain and distributes better the stress.

The advantages of the invention will be still clearer by the following description of a preferred embodiment of a chain tensioner, making reference to the attached drawing in which
Figure 1 shows a well-known chain tensioning in three-dimensional view;
Figure 2 shows a chain tensioner according to the invention in three-dimensional view;
Figure 3 shows an exploded view of the chain tensioner in Figure 2;

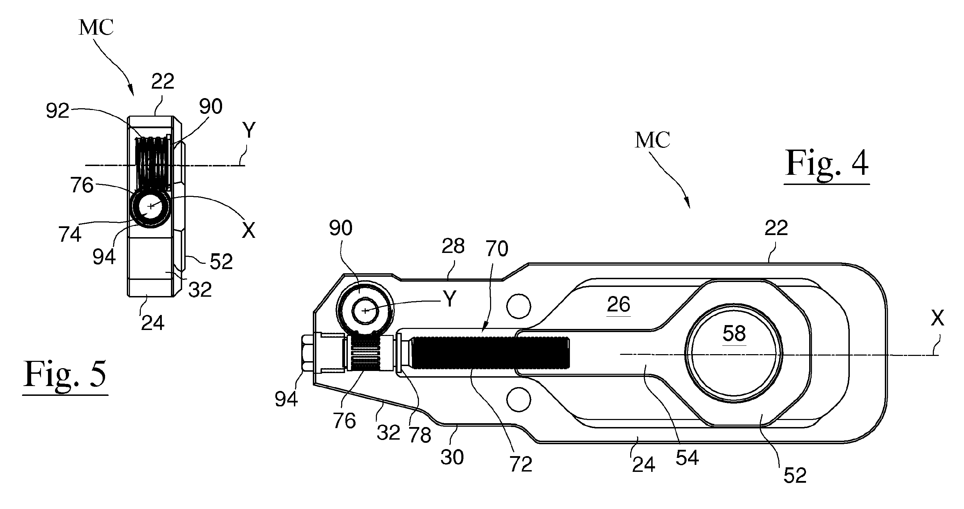

Figure 4 shows a side view of the chain tensioner in Figure 2;
Figure 5 shows a front view of the chain tensioner in Figure 2; 10
Figure 6 shows a variant of the chain tensioner in three-dimensional view;
Figure 7 shows an exploded view of the chain tensioner in Figure 6.

In the following figures identical numbers indicate identical or conceptually similar parts. The chain tensioner is described as being in use.

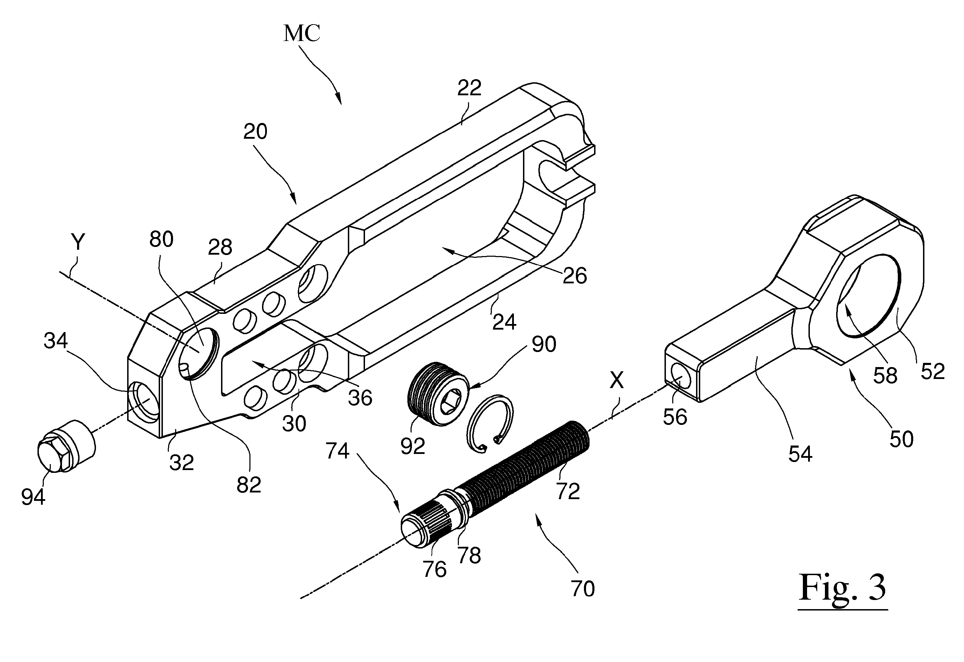

The chain tensioner MC is formed essentially by a first piece or component 20 and a second piece or component 50 (Figure 3).

The first piece 20 is attachable to a rear fork of the motorcycle (not shown), has the form of a ring and comprises two rectilinear and parallel portions 22, 24 which delimit a pass-through cavity 26 in which the piece 50 can slide linearly and guided along an axis X. The two portions 22, 24 connect at one end of the piece 20 and at the other end continue with other two rectilinear and parallel portions 28, 30. These latter straight portions 28, 30 are closer to each other than the other two and delimit a pass-through cavity 36. The portions 28, 30 join in a common block 32, which forms the other end of the piece 20.

The piece 50 comprises a block 52, e.g. with octagonal plan, mounted to slide guided inside the cavity 26 without getting out of it. The block 52 has: in the center, an opening or hole 58 to accommodate a pin or wheel hub (not shown), and outside a stem 54 provided with an axial bore 56 (along the X axis) having internally a female-thread.

The block 32 has: a circular seat 80, which extends in the block 32 transversely to the length of the portion 28 along an axis Y orthogonal to the axis X, and a pass-through hole 34 which communicates with the cavity 36 and in which a head 74 of a pin 70 is snugly insertable. The head 74 comprises, in order, a superficially knurled part or crown 76 and an annular collar 78. The remaining body of the pin 70 has a thread 72, complementary to the female-thread present in the hole 56.

The head 74 is rotatably inserted into the hole 34, so that the collar 78 abuts on the block 32 and does not allow the pin to move back towards the block 32. A cap 94 closes the hole 34 and is fixed to the head 74, to maintain the pin 70 stationary along the X axis but free to rotate. The stress imposed by the tension of the chain can be discharged via the collar 78 on the outer wall of the block 32.

In the seat 80 there is rotatably mounted a complementary disc or cylindrical dowel 90 having on the lateral surface a thread 92, matching or compatible with the knurling 76. The assembly and the relative distances are such that the thread 92, through an opening 82 of the seat 80 which communicates with the cavity 36, touches and meshes with the knurling 76.

### OPERATION

Once the piece 50 is assembled into the piece 20, the head 74 is connected to the plug 94 and the thread 72 is screwed a little into the hole 56, the chain tensioner MC is ready to use. It is fixed at the fork by inserting into the seat 58 the hub of the wheel. To tighten the chain more one moves relatively the two pieces 20, 50 along the X axis through a relative rotation between the pin 70 and the stem 54, which rotation is obtained by rotating the disc 90 around the axis Y (e.g. with an Allen key). The disc 90 upon rotating advances the thread 92 on the knurling 76, and thanks to this meshing the pin 70 is driven into rotation, penetrates more in the hole 56 and pulls/pushes the piece 50 towards/away from the block 32.

### VARIANTS

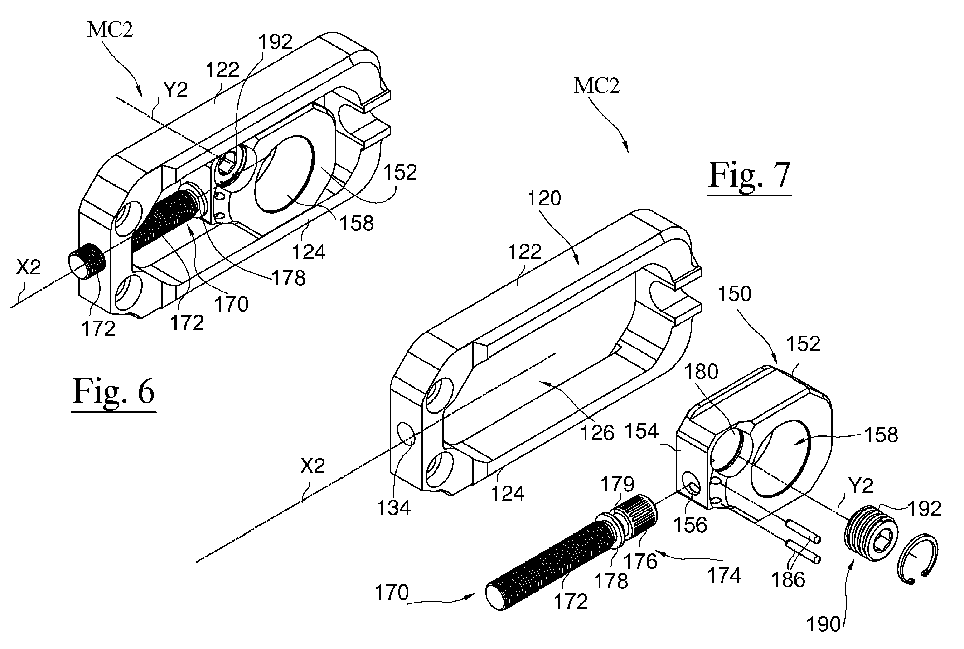

A second chain tensioner MC2 is illustrated in figures 6, 7 and is formed essentially by a first piece or component 120 and a second piece or component 150.

The first piece 120 is fixed to the fork arm (not shown), has the form of a ring and comprises two rectilinear and parallel portions 122, 124 which define a pass-through cavity 126 in which the piece 150 can linearly slide guided along an axis X2. The two portions 122, 124 join at the two ends of the piece 120 to close the ring, and one of these ends has a pass-through hole 134, coaxial with the axis X2, provided inside with a female-thread.

The piece 150 comprises a block 152, e.g. with about octagonal plan, mounted to slide guided inside the cavity 126 without getting out of it. The block 152 has: in the center, an opening or hole 158, to accommodate a pin or wheel hub (not shown), and outside a projection 154. Such projection 154 is provided with an axial hole 156 (along the axis X2) and a circular seat 180, which extends in the piece 150 with axis Y2 perpendicular to the axis X2.

In the hole 156 the head 174 of a pin 170 is insertable. The head 174 comprises, in order, a superficially knurled part or crown 176, a radial groove 179 in which the diameter of the pin 170 is reduced and an annular collar 178. The remaining body of the pin 170 has a thread 172, complementary to the female-thread formed inside the hole 134.

The head 174 is rotatably inserted into the hole 156, so that the collar 178 abuts on the projection 154 and does not allow the pin 170 to move back toward the piece 150. Two pins 186 are inserted in two holes in the projection 154 at the sides of the hole 156, so that inside the piece 150 they are inside the groove 179 and by contrast they block the head 174 preventing it from going out of the piece 150 but leaving it free to rotate about the axis X2 (Figure 6).

The substantial difference is the position of the rotary element, which here, indicated with 190 and equal to the element 90, is housed inside the piece 150, namely the piece which is movable relative to the piece mounted on the fork. The element 190 has an external thread 192 and is rotatably housed inside the seat 180, which has an opening towards the hole 156 so that the thread 192 touches and meshes with the knurling 176.

### OPERATION

Once the piece 150 is assembled into the piece 120, the thread 172 is screwed a little in the hole 134, the head 174 is inserted into the hole 156 while binding it there by the pins 186; the tensioner MC2 is ready for use. It is fixed at the fork by inserting into the seat 158 the wheel hub. To tighten the chain more one moves relatively the two pieces 120, 150 along the axis X2 by means of the relative rotation between the pin 170 and the piece 120, which rotation is obtained by rotating the disc 190 around the axis Y2. The disc 190 upon turning advances the thread on the knurled 192 176, and thanks to this meshing the pin 170 is driven into rotation, and pulls/pushes the piece 150 towards/away from the hole 134.

The chain tensioner may have many other variants, to be used alone or in combination with each other and/or with what has been already described. E.g.
- the shape of the piece 20, 50 or the piece 120, 150 may be different e.g. the block 52 o 152 may not be present;
- the location of the disc or dowel 90, 190 can vary and stay on the piece 50, 150, 20, 120 in any suitable location;
- there can be a female-thread rotating relatively to a fixed threaded pin;
- the chain tensioner can tighten the chain by moving the piece 50, 150 towards or away from the block 32, 154, e.g. the direction of assembly on the fork being indifferent;
- the knurling 76, 176 may be replaced by a toothing or a thread;
- the relative orientation between the axes X and Y, Y2.

## Claims

1. Chain tensioner (MC; MC2) for tensioning a driving chain of a motorcycle, comprising
a first piece (20, 120) which can be fixed to a fork of the motorcycle;
a second piece (50, 150) which comprises a fitting (18, 158) for a wheel of the motorcycle and which is guided by the first piece;
a threaded element (70, 170) cooperating with a corresponding female-thread so that a relative rotation of these last two entails the displacement of the second piece relative to the first piece;
**characterized by** comprising
an element (90, 190), separated from the threaded element and the female-thread, adapted to transmit motion to at least one of the threaded element and the female-thread so as to cause said rotation.

2. Chain tensioner according to claim 1, wherein the separate element is in direct contact with the at least one.

3. Chain tensioner according to claim 2, wherein the separate element is mounted meshing with the at least one.

4. Chain tensioner according to claim 2 or 3, wherein the separate element comprises a threaded portion (92, 192) engaged on a threaded or knurled portion (76, 176) of the at least one.

5. Chain tensioner according to any one of the preceding claims, wherein the separate element is housed in a seat (80, 180) obtained in the first or second piece.

6. Chain tensioner according to claim 5, wherein the seat comprises a wall with an opening (82) from which the at least one is accessible.

7. Chain tensioner according to any one of the preceding claims, wherein the separate element is mounted rotatable.

8. Chain tensioner according to claim 7, wherein the separate element has a rotation axis (Y, Y2) different from a rotation axis (X) of the at least one.

9. Chain tensioner (MC2) according to any one of the preceding claims, wherein the threaded element (170) can be screwed into a corresponding female-thread formed in the first piece (120).

10. Chain tensioner according to claim 9, wherein the threaded element comprises a projection (178) mounted in abutment on the outer surface of the second piece (150).
